# EUROPÄISCHE PATENTSCHRIFT

(11) **EP 3 231 051 B1**
(45) Veröffentlichungstag und Bekanntmachung des Hinweises auf die Patenterteilung: **01.03.2023**
(21) Anmeldenummer: 15816685.0
(22) Anmeldetag: 07.12.2015
(51) Int. Cl.: H02G 3/04, B61D 1/00

(54) **SCHIENENFAHRZEUG MIT SEITLICH ZUGÄNGLICHEM KABELKANAL**
RAIL VEHICLE COMPRISING A LATERALLY ACCESSIBLE CABLE DUCT
VÉHICULE FERROVIAIRE AVEC CHEMIN DE CÂBLES ACCESSIBLE LATÉRALEMENT

(30) Priorität: 09.12.2014 DE 102014118241
(43) Veröffentlichungstag der Anmeldung: 18.10.2017
(73) Patentinhaber: Bombardier Transportation GmbH, 10785 Berlin (DE)
(72) Erfinder: BIALOSCEK, André, 14482 Potsdam (DE); LIESENBERG, Burkart, 16548 Glienicke (DE); ESPIG, Stephan, 16761 Hennigsdorf (DE); GLOMB, Christian, 16766 Kremmen (DE)
(74) Vertreter: Zimmermann & Partner Patentanwälte mbB
(86) Internationale Anmeldenummer: PCT/EP2015/078881
(87) Internationale Veröffentlichungsnummer: WO 2016/091831

(56) Entgegenhaltungen:
- EP-A1- 0 050 200
- EP-A1- 0 348 930
- EP-A2- 1 832 491
- WO-A1-2014/165904
- AU-B2- 413 020
- FR-A1- 2 595 533
- JP-Y1- S5 132 953
- KR-A- 20120 013 049

## Beschreibung

### Technisches Gebiet

Die Erfindung betrifft einen Schienenfahrzeugwagen mit wenigstens einem seitlich zugänglichen Kabelkanal.

### Vorbekannter Stand der Technik

Ein Kabelkanal ermöglicht ein gebündeltes Führen von elektrischen Leitungen zur Versorgung des Schienenfahrzeugs. Dabei handelt es sich üblicherweise um eine abgekantete Lochbleche, befestigt auf Traversen oder einem Rahmen, welcher dann komplett oder teilweise vormontiert an das Fahrzeug angebracht wird. Üblicherweise wird der Kanal in seiner Form deutlicher breiter als hoch ausgeführt, um die Leitungen und Kabel optimal verlegen zu können. Dokument EP 0 050 200 A1 offenbart eine hängende, selbsttragende Abdeckhaube zum Geräteschutz und zur Aerodynamik-Verbesserung. Dokument JP S51 32953 Y1 offenbart einen in tragende Strukturen des Schienenfahrzeugs integrierten Kabelkanal. Dokument EP 1 832 491 A2 offenbart ein Schienenfahrzeug mit einem Untergestell. Dokument EP 0 348 930 A1 offenbart eine Vorrichtung zum Öffnen und Schließen einer unteren Klappe eines Waggons. Dokument WO 2014/165904 A1 offenbart einen Kabelkanal für elektrische Kabel, wobei der Kabelkanal zum Befestigen an einer Außenfläche eines Wohnmobils eingerichtet ist. Dokument FR 2 595 533 A1 offenbart eine Plattform für Kabelkanäle für ein Schienenfahrzeug. Dokument KR 2012 0013049 A offenbart eine Teile-Halterung für den Unterbau eines Schienenfahrzeugs. Dokument AU 413 020 A offenbart einen Untergestell-Karosseriebau für Eisenbahnwaggons.

Bei modernen Schienenfahrzeugen wird der Kanalkanal im Untergestell integriert und an der Wagenkastenstirnwand übergeben. Dazu müssen die elektrischen Leitungen entweder mittig über dem Drehgestell oder am Außenlangträger (abhängig von der Bauart des Drehgestells) entlang geführt werden. Alternativ können die elektrischen Leitungen im Innenraum unter die Decke mit Hilfe eines Tragrahmens montiert und dann an der Wagenkastenstirnwand übergeben werden.

So wird beispielsweise in der DE 199 02 729 C1 ein Verfahren beschrieben, wie ein Kabelkanal von unten an den Wagenkasten montiert werden kann. Dazu wird der Kabelkanal auf ein Arbeitsgestell aufgelegt, auf diesem Arbeitsgestell befüllt und zum Wagenkasten verfahren, und mitsamt dem Arbeitsgestell unterhalb des Wagenkastens zu den Befestigungspunkten ausgerichtet und bis zum Anliegen an der Wagenkastenunterseite angehoben, in welcher Position das Befestigen der Trasse bzw. des Kabelkanals an der Wagenkastenunterseite erfolgt.

Aus der EP 1 767 426 A2 ist ein Schienenfahrzeug bekannt, bei dem die elektrischen Leitungen in einem Leitungskanal untergebracht sind, der ebenfalls unterhalb des Wagenkastens des Schienenfahrzeugs angeordnet ist. Der Leitungskanal weist eine dem Verlauf der Wagenkastenunterseite angepasste Kanalform auf.

Die Führung von Hydraulikleitungen im Dachbereich ist dagegen in der EP 1 808 365 A1 beschrieben. Ein Fahrzeug weist ein integriertes Dachmodulelement auf, das einen oberen Längskantenbereich einer Fahrzeugstruktur bildet und ein oder mehrere zusätzliche Funktionselemente hat, wobei in dem Dachmodulelement mindestens ein Luftführungskanal und/oder wenigstens eine Pneumatik- und/oder Hydraulikleitung integriert ist.

### Nachteile des Standes der Technik

Die obigen Lösungen gestatten weder eine einfache Montage, noch erlauben sie einen einfachen Zugang zum Kabelkanal.

### Problemstellung

Es ist daher Aufgabe der vorliegenden Erfindung, eine einfache Möglichkeit zur Führung von Kabeln in einem Schienenfahrzeug vorzuschlagen.

### Erfindungsgemäße Lösung

Diese Aufgabe wird gelöst durch einen Schienenfahrzeugwagen nach Anspruch 1. Weitere Ausführungsformen, Modifikationen und Verbesserungen ergeben sich anhand der folgenden Beschreibung und der beigefügten Ansprüche.

Gemäß einer Ausführungsform umfasst ein Schienenfahrzeugwagen ein Untergestell, das mindestens einen sich in Fahrzeuglängsrichtung erstreckenden Langträger aufweist. Weiterhin umfasst der Schienenfahrzeugwagen mindestens zwei am Langträger befestigte Konsolen und mindestens einen längs des Langträgers verlaufenden Kabelkanal, der einen an den Konsolen befestigten Kabelkanalkörper und einen Deckel aufweist, wobei der Deckel des Kabelkanals zur Außenseite des Schienenfahrzeugs weist und den Kabelkanal seitlich verschließt.

Der Kabelkanal wird erfindungsgemäß an der Außenseite des Schienenfahrzeugwagens und typischerweise unterhalb und längs des Langträgers geführt. Der den Kabelkanal seitlich verschließende Deckel kann gleichzeitig einen Teil der Außenverkleidung des Schienenfahrzeugwagens bilden. Der Kabelkanal bietet nach Entfernen oder Wegklappen des Deckels einen seitlichen Zugang zum Kabelkanal, wodurch das Verlegen von Kabeln erleichtert wird. Außerdem wird dadurch ein verbesserter Zugang im Wartungsfall ermöglicht.

Gemäß einer Ausführungsform weisen die Konsolen in Fahrzeuglängsrichtung verlaufende Langlöcher auf. Der Kabelkanalkörper ist mittels Befestigungsmitteln, welche durch die Langlöcher hindurchgreifen, an den Konsolen befestigt, um ein Ausrichten des Kabelkanals in Fahrzeuglängsrichtung zu ermöglichen. Die Langlöcher gestatten einen Toleranzausgleich bei der Montage des Kabelkanals. Typischerweise wird der Kabelkanalkörper mit geöffnetem oder abgenommenem Deckel an den Konsolen angeschraubt. Dies erfolgt von der Seite des Schienenfahrzeugs, was deutlich einfacher als die bisher bekannten Lösungen ist, bei denen der Kabelkanal von unten an den Wagenkasten angeschraubt wird. Außerdem kann der Kabelkanalkörper ohne bereits eingelegte Kabel und dergleichen montiert werden, was deutlich einfacher ist.

Bei Verwendung von lösbaren Befestigungsmitteln, wie z.B. Schraubverbindungen, lässt sich der Kabelkanal auch wieder leicht abbauen, was insbesondere bei Reparaturen, Instandhaltungsmaßnahmen, zur Beseitigung von Unfallschäden oder bei Revisionen von Vorteil ist.

Gemäß einer Ausführungsform weist der Kabelkanal im Querschnitt gesehen eine zur Schienenfahrzeugmitte weisende innere Längsseite auf, mit der der Kabelkanal an den Konsolen anliegt. Der Deckel schließt eine zur Schienenfahrzeugaußenseite weisende äußere Längsseite des Kabelkanals ab, wobei die beiden Längsseiten des Kabelkanals länger sind als eine in Fahrzeugquerrichtung verlaufende Unterseite des Kabelkanals.

Im Querschnitt gesehen, d.h. in einer Ebene senkrecht zur Längserstreckung des Kabelkanals, ist der Kabelkanal höher als breit, im Gegensatz zu bisher verwendeten Kabelkanälen, die typischerweise breiter als hoch sind. Die hier gewählte Querschnittsform erlaubt es, den Kabelkanal an der Außenseite des Schienenfahrzeugs entlangzuführen und als Teil der Außenverkleidung zu nutzen, obwohl dort der zur Verfügung stehende Bauraum beschränkt ist. Der Gesamtquerschnitt des Kabelkanals kann trotzdem ausreichend bemessen sein, um alle Kabel aufzunehmen. Außerdem ist es möglich, auf jeder Seite des Schienenfahrzeugs einen Kabelkanal vorzusehen.

Der Kabelkanal wird bevorzugt - von außen gesehen - vor den Konsolen angeordnet, sodass diese durch den Kabelkanal zumindest teilweise verdeckt sind. Dadurch wird insgesamt eine leichte Zugänglichkeit erreicht.

Gemäß einer Ausführungsform umfasst mindestens eine der Konsolen eine Auflagefläche, auf der der Kabelkanalkörper aufliegt. Die Auflagefläche dient dazu, eine möglichst große Fläche bereitzustellen, auf welcher sich das Gewicht des Kabelkanals verteilt. Dies ist im Vergleich zu eher punktförmigen Verbindungen von Vorteil, da hier das Material des Kabelkanals weniger stark beansprucht wird. Typischerweise weist jede Konsole eine derartige Auflagefläche auf. Die Auflageflächen können, in Längsrichtung des Schienenfahrzeugs gesehen, breiter sein als die Konsolen, um möglichst große Flächen zur Verfügung zu stellen.

Gemäß einer Ausführungsform liegt der Kabelkanalkörper formschlüssig mit Bereichen seiner inneren Längsseite und seiner Unterseite auf der Auflagefläche auf. Die Auflagefläche, oder Auflageflächen, können beispielsweise L-förmig und der Außenkontur des Kabelkanalkörpers angepasst sein. Diese Ausbildung der Auflagefläche ist auch bei der Montage des Kabelkanals von Vorteil, da dieser zunächst auf die Auflagefläche aufgelegt werden kann und dann bereits von dieser gestützt wird. Zur eigentlichen Befestigung muss der Kabelkanalkörper dann nicht extra gehalten werden.

Gemäß einer Ausführungsform weist der Kabelkanalkörper mindestens eine in Längsrichtung des Kabelkanals verlaufende innere Trennwand zur Unterteilung des Innenraums des Kabelkanalkörpers in mindestens zwei in Längsrichtung des Kabelkanals verlaufende Innenräume auf. Die Trennwand bildet typischerweise eine horizontale Fläche, welche den Boden des einen Innenraums bildet, auf dem Kabel oder andere Installationseinrichtungen angeordnet und von diesem gehalten werden. Die Unterteilung in zwei oder mehrere Innenräume verbessert zum einen die Übersichtlichkeit innerhalb des Kabelkanals, zum anderen erlaubt sie, dass deutlich mehr Kabel geordnet untergebracht werden können. Die Trennwand, oder die Trennwände, bilden die Auflageflächen, auf denen die Kabel aufliegen. Insgesamt wird so die Fläche, auf der die Kabel geordnet gelagert werden, deutlich erhöht, auch wenn der Kabelkanal im Querschnitt gesehen hochkant angeordnet ist. Durch den seitlichen Deckel ist der Zugang zu allen durch die Trennwände voneinander getrennten Innenräumen gewährleistet.

Gemäß einer Ausführungsform kann der Schienenfahrzeugwagen weiterhin mindestens ein Drehgestell und eine Drehgestellverkleidung umfassen, die an den Konsolen befestigt ist, wobei der Kabelkanal zwischen dem Langträger des Schienenfahrzeugwagens und der Drehgestellverkleidung angeordnet ist. Die Konsolen übernehmen damit noch eine weitere Funktion. Typischerweise ist die Drehgestellverkleidung am unteren Ende der Konsolen befestigt. Dieses untere Ende ragt typischerweise über die Unterseite des Kabelkanals heraus. Die Außenverkleidung des Schienenfahrzeugs wird dann nach unten von der Drehgestellverkleidung fortgeführt, um zusammen mit dem Kabelkanal und der oberhalb des Kabelkanals befindlichen Außenverkleidung dem Schienenfahrzeug eine aerodynamisch günstige Außenform zu verleihen.

Insgesamt lässt sich so die Drehgestellverkleidung geeignet integrieren und leicht montieren.

Gemäß einer Ausführungsform ist die Drehgestellverkleidung mittels einer C-Schiene an den Konsolen befestigt. Die Art der Befestigung ist vergleichsweise einfach und gleichzeitig sehr vielseitig, da die C-Schienen beispielsweise einen Toleranzausgleich zulassen. Durch die Verwendung von C-Schienen können auch weitere Installationseinrichtungen leicht befestigt werden.

Gemäß einer Ausführungsform ist die Drehgestellverkleidung klappbar an den Konsolen befestigt. Dadurch wird ein sehr bequemer Zugang zum Drehgestell, beispielsweise zu Revisionszwecken, breitgestellt. Dies ist insbesondere bei angetriebenen Drehgestellten von Vorteil, da hier der Wartungsaufwand deutlich höher ist als bei reinen Laufdrehgestellen.

Die zum Klappen erforderlichen Klappscharniere können ebenfalls an den C-Schienen, oder anderweitig, befestigt werden.

Gemäß einer Ausführungsform umgreift der Deckel des Kabelkanals in montiertem Zustand den Kabelkanalkörper an dessen Unterseite zumindest teilweise. Dies dient der sicheren Befestigung des Deckels und gleichzeitig dem sicheren Abschluss, um das Eindringen von Fremdkörper zu vermeiden. Außerdem wird damit die mechanische Festigkeit des Kabelkanals verbessert.

Gemäß einer Ausführungsform ist der Deckel des Kabelkanals mittels Schraubverbindungen, die einen Toleranzausgleich in Fahrzeugquerrichtung ermöglichen, am Kabelkanalkörper befestigt ist. Die Schraubverbindungen können beispielsweise an der Unterseite des Kabelkanals angeordnet sein. Der Deckel kann weiterhin am oberen Rand in den Kabelkanal eingehängt oder eingeschoben sein.

Gemäß einer Ausführungsform umfasst der Schienenfahrzeugwagen weiterhin zumindest eine Schlingerdämpferkonsole und/oder eine Anhebekonsole, die am Langträger und/oder einem Querträger des Untergestells befestigt ist oder sind und - von der Außenseite des Schienenfahrzeugwagens gesehen - hinter dem Kabelkanal verlaufen. Da der Kabelkanal vor diesen Konsolen angeordnet ist, bleibt die leichte Zugänglichkeit zum Kabelkanal erhalten.

Gemäß einer Ausführungsform ist die Schlingerdämpferkonsole und/oder die Anhebekonsole am Langträger und/oder einem Querträger angeschweißt ist. Der Kabelkanalkanalkörper weist an seiner zur Schlingerdämpferkonsole und/oder Anhebekonsole weisenden Seite eine in Längsrichtung des Kabelkanals verlaufende Längsvertiefung entlang der Schweißnaht auf. Diese Längsvertiefung ermöglicht einen seitlichen Sichtzugang zur Schweißnaht, um beispielsweise die Schweißnaht mittels eines Endoskops zu untersuchen. Dazu kann die Längsvertiefung beispielsweise entlang des Übergangs zwischen innerer Längsseite und Oberseite verlaufen. Da diese Schweißnähte erhöhter Beanspruchung ausgesetzt sind, ist deren regelmäßige Kontrolle erforderlich.

Gemäß einer Ausführungsform ist der Kabelkanal aus dünnem Blech geformt ist, um diesen mit geringem Eigengewicht zu versehen. Zur Verbesserung der Stabilität des Kabelkanals ruht dieser, bevorzugt formschlüssig, auf den Auflageflächen, die an den Konsolen vorgesehen oder an diesen anmontiert sind.

Gemäß einem Aspekt der vorliegenden Erfindung wird ein Kabelkanal für einen Schienenfahrzeugwagen mit einem Untergestell, das mindestens einen sich in Fahrzeuglängsrichtung erstreckenden Langträger umfasst, und mit mindestens zwei Konsolen, die am Langträger befestigt sind, bereitgestellt. Gemäß einer Ausführungsform kann der Schienenfahrzeugwagen ein Schienenfahrzeugwagen nach einer der hierin beschriebenen Ausführungsformen sein. Der Kabelkanal umfasst einen Kabelkanalkörper mit einem Deckel, der den Kabelkanal verschließt. Der Deckel bildet typischerweise einen Abschnitt einer Außenverkleidung für einen Schienenfahrzeugwagen. Der Kabelkanalkörper kann an den Konsolen des Schienenfahrzeugwagens befestigt werden.

Insgesamt wird durch die hier vorgestellte Lösung die elektrische Leitungsverlegung in das Untergestell des Schienenfahrzeugwagens integriert. Dazu erfolgt die Übergabe und Führung der Leitungen und Kabel im Schienenfahrzeugwagen mit Laufdrehgestellen am äußeren Langträger. Obwohl dort der zur Verfügung stehende Bauraum an sich beschränkt ist, kann die Vielzahl an elektrischen Leitungen durch den im Querschnitt hochkant ausgebildeten und ggf. mit horizontal verlaufenden inneren Trennwänden unterteilten Kabelkanal sicher aufgenommen werden.

Die hier vorgestellte Lösung bietet daher eine Reihe von Vorteilen:

Der Kabelkanal besitzt eine leicht zu lösende Verbindung zum Wagenkasten, d.h. zum Untergestell des Wagenkastens. Dies ist für Fahrzeugrevisionen, Instandhaltung oder Unfallschadenbeseitigung von Vorteil.

Der Kabelkanal verfügt über einen seitig (y-Richtung) freien Zugang zur einfachen Montage der elektrischen Leitungen.

Der Kabelkanal schafft - trotz des geringen Bauraums - einen maximalen Querschnitt für die Verlegung der elektrischen Leitungen.

Eine Drehgestellverkleidung kann insbesondere am Endwagen zur aerodynamischen Verbesserung des Schienenfahrzeugwagens integriert werden.

Trotz des Kabelkanals besteht ein Zugang, um kritische Schweißnähte am Wagenkasten, z.B. zwischen Schlingerdämpferkonsole und Langträger oder Querträger, zu überprüfen, ohne dass der Kabelkanal abgebaut werden muss.

Die Befestigung des Kabelkanals erlaubt die Einstellbarkeit von Toleranzen.

Der Kabelkanal kann mit einem möglichst geringen Gewicht durch Verwendung von Blechen ausgebildet werden.

### Figuren

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu. Gleiche Bezugszeichen bezeichnen entsprechend ähnliche Teile.
Figur 1 zeigt einen montierten Kabelkanal und eine Drehgestellverkleidung aus Richtung der Schienenfahrzeugmitte gemäß einer Ausführungsform.
Figur 2 zeigt den montierten Kabelkanal und eine Drehgestellverkleidung von der Außenseite des Schienenfahrzeugs her betrachtet.
Figur 3 zeigt einen Schnitt entlang der Linie A-A in Figur 1.
Figur 4 zeigt einen Schnitt entlang der Linie B-B in Figur 1.
Figur 5 zeigt einen Schnitt entlang der Linie C-C in Figur 1.
Figur 6 zeigt einen Schienenfahrzeugwagen mit seitlich integriertem Kabelkanal.
Figur 7 zeigt das Detail D aus Figur 4.
Figur 8 zeigt das Detail F aus Figur 1.
Figur 9 zeigt das Detail E aus Figur 5.

### Ausführungsbeispiele

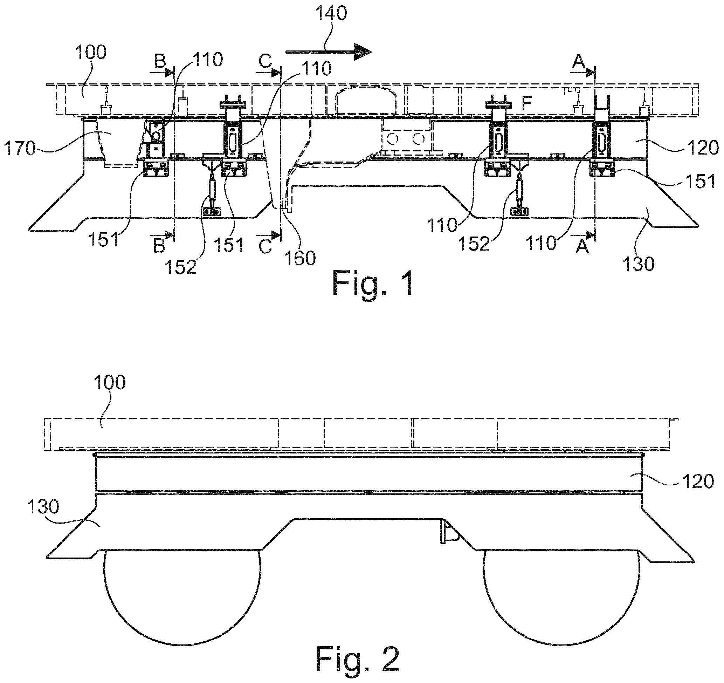

Figuren 1 und 2 zeigen einen Ausschnitt eines Untergestells eines Wagenkastens eines Schienenfahrzeugwagens gemäß eines Ausführungsbeispiels, wobei Figur 1 eine Ansicht von der Schienenfahrzeugwageninnenseite und Figur 2 eine Ansicht von der Schienenfahrzeugaußenseite darstellt.

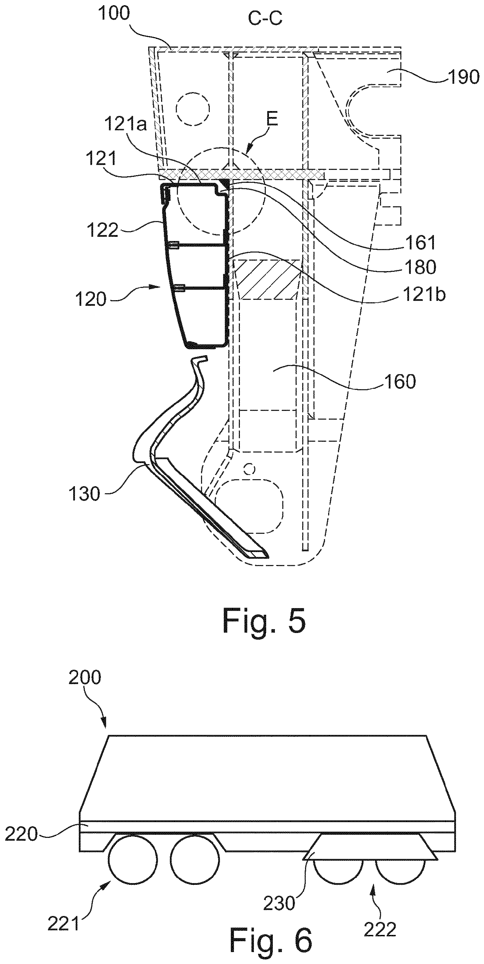

Figur 6 zeigt dagegen schematisch einen Schienenfahrzeugwagen 200 mit an der Außenseite geführtem Kabelkanal 220 oberhalb der Drehgestelle 221, 222. Das führende Drehgestell 222 ist hier mit einer Drehgestellverkleidung 230 versehen. Konkreter ist dies in den Figuren 1 und 2 gezeigt.

Das Untergestell umfasst mindestens einen Langträger 100, der sich in Längsrichtung 140 des Schienenfahrzeugwagens erstreckt. Im vorliegenden Ausführungsbeispiel kann es sich um den Außenlangträger des Untergestells handeln. Das Untergestell kann weitere Langträger umfassen, insbesondere einen weiteren Langträger auf der anderen Außenseite des Schienenfahrzeugwagens.

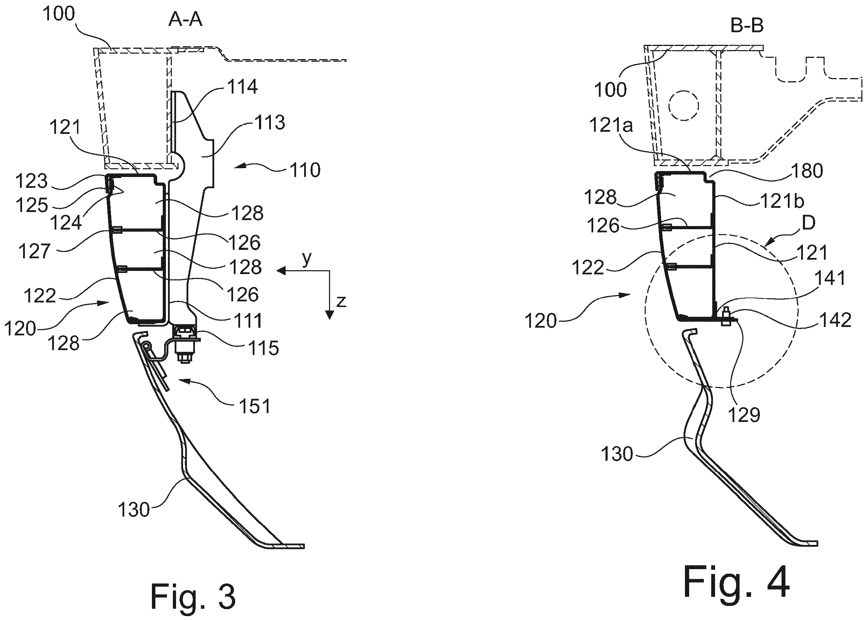

Am Langträger 100 sind Konsolen 110 befestigt, die quer zum Langträger 100 nach unten weisend verlaufen. Typischerweise sind die Konsolen 110 am Langträger 100 angeschweißt. Dies ist deutlicher in Figur 3 erkennbar, die einen Querschnitt längs der Linie A-A aus Figur 1 zeigt.

Die Konsolen 110 können dazu an einer zur Schienenfahrzeuginnenseite weisende Seitenflächen des Langträgers 100 angeschweißt sein. Zur Stabiliserung der Konsolen 110 verfügen diese - im Querschnitt zu ihrer Längserstreckung gesehen - über einen etwa T-förmigen Querschnitt, einen doppel T-förmigen Querschnitt, oder einen U-förmigen Querschnitt. Andere Querschnitte sind ebenfalls möglich. Beispielsweise kann jede Konsole 100 über eine Grundplatte 114 und daran angeschweißte Verstrebungen 113 verfügen.

Wie in Figur 1 erkennbar, kann eine Vielzahl von Konsolen 110 vorgesehen sein, die beabstandet zueinander am Langträger 100 angeschweißt sind. An dem unteren Ende der Konsolen 110 können Scharniere 151 befestigt sein, welche ein Hochklappen einer Drehgestellverkleidung 130 ermöglichen. Die Drehgestellverkleidung 130 muss jedoch nicht vorgesehen werden. Sie bietet sich jedoch insbesondere an Endwagen eines Schienenfahrzeugs an, da hier aerodynamisch kritische Bereiche vorliegen. Mittels Gasdämpfer 152 bleibt die Drehgestellverkleidung 130 in Position. Außerdem erleichtern die Gasdämpfer 152 das Hochklappen der Drehgestellverkleidung 130. Die Gasdämpfer 152 sind an der Innenseite der Drehgestellverkleidung 130 und den Konsolen 110, beispielsweise mittels C-Schienen 115, befestigt.

Figur 2 zeigt den Ausschnitt des Untergestells von der Außenseite. Die Drehgestellverkleidung 130 bedeckt den oberen Teil des Drehgestells und bildet einen Teil der Außenverkleidung des Schienenfahrzeugwagens. Oberhalb der Drehgestellverkleidung 130 verläuft der Kabelkanal 120, der durch seinen Deckel verschlossen ist. Dieser bildet ebenfalls einen Teil der Außenverkleidung des Schienenfahrzeugwagens. Der Langträger 100 ist zwar in Figur 2 gezeigt, jedoch normalerweise ebenfalls durch die Außenverkleidung des Schienenfahrzeugwagens verdeckt.

Das Untergestell kann weiterhin mindestens eine Schlingerdämpferkonsole 160 und/oder eine Anhebekonsolen 170 aufweisen. Die Schlingerdämpferkonsole 160 ist typischerweise über Schlingerdämpfer mit dem Drehgestellrahmen verbunden und dient zur Reduzierung von Schlingerbewegungen des Schienenfahrzeugwagens.

Aufgrund der Schlingerdämpferkonsolen 160 und Anhebekonsolen 170 steht nur relativ geringer Bauraum seitlich neben diesen Konsolen zur Verfügung. Daher ist der Kabelkanal 120 - im Querschnitt gesehen - hochkannt ausgeführt im Gegensatz zum typischen Querschnittsprofil eines Kabelkanals, das deutlich breiter als höher ist. Der Kabelkanal 120 ist bei der hier vorgestellten Lösung deutlich höher als breit. Dies ist insbesondere in den Figuren 3 bis 5 erkennbar.

Der Kabelkanal 120 weist einen fest mit den Konsolen 110 verbunden Kabelkanalkörper 121 sowie einen lösbar mit dem Kabelkanalkörper 121 verbunden seitlichen Deckel 122 auf. Dadurch wird ein seitlich unbehinderter Zugang zum Kabelkanal 120 ermöglicht. Der seitliche Zugang wird durch den Deckel 122 verschlossen, der dann auch einen Teil der Außenverkleidung des Schienenfahrzeugwagens bildet. Der Deckel 122 bildet die äußere Längsseite des Kabelkanals 120, während die zu den Konsolen 110 weisende Seite des Kabelkanalkörpers 121 die innere Längsseite des Kabelkanals 120 bildet.

Der Kabelkanal 120 wird bevorzugt aus dünnen Blechen, beispielsweise Metallblechen mit einer Materialstärke zwischen 1 mm und 2 mm, hergestellt, um den Kabelkanal 120 mit möglichst geringem Gewicht auszubilden. Der Kabelkanalkörper 121 kann dazu, im Querschnitt gesehen, im wesentlichen U-förmig sein, wobei der Boden des "U" zu den Konsolen 110 weist.

Aufgrund der Verwendung von dünnen Blechen besitzt der Kabelkanal 120 eine geringe Festigkeit. Daher wird der Kabelkanal 120 nicht einfach gegen die Konsolen geschraubt, da das dünne Blech keine ausreichende Stabilität bietet. Durch Verwendung von geeignet geformten Auflagefläche 111, die an den Konsolen 110 vorgesehen sind, kann dieses Problem umgangen werden. Die Auflageflächen 111 können beispielsweise L-förmig und der Außenkontur des Kabelkanalkörpers 121 angepasst sein. Dadurch wird ein Formschluss zwischen Auflageflächen 111 und Kabelkanalkörper 121 herbeigeführt. Die so vergrößerte Kontaktfläche nimmt das Gewicht des Kabelkanals 120 einschließlich aller darin befindlichen Kabel auf und unterstützt den Kabelkanalkörper 121 ganzflächig. Somit können die auftretenden Belastungen optimal aufgenommen werden und zwar sowohl in Fahrzeugquerrichtung (y-Richtung) als auch in Fahrzeuglängsrichtung (z-Richtung).

Der Kabelkanalkörper 121 ist an seinem oberen äußeren Rand leicht nach unten gezogen. Weiterhin ist im Kabelkanalkörper 121 ein Anschlagblech 124 vorgesehen, das beabstandet und parallel zum oberen Rand des Kabelkanalkörpers 121 verläuft, um dadurch eine Aufnehmung 123 zwischen dem oberen Rand des Kabelkanalkörpers 121 und dem Anschlagblech 124 zu bilden, in die der Deckel 122 mit seinem oberen Rand eingreifen kann. Ein Dämpfungselement 125 drückt den oberen Rand des Deckels 122 fest gegen das Anschlagsblech 124 und fixiert dadurch den oberen Rand des Deckels 122. Außerdem wird dadurch eine Abdichtung bewirkt.

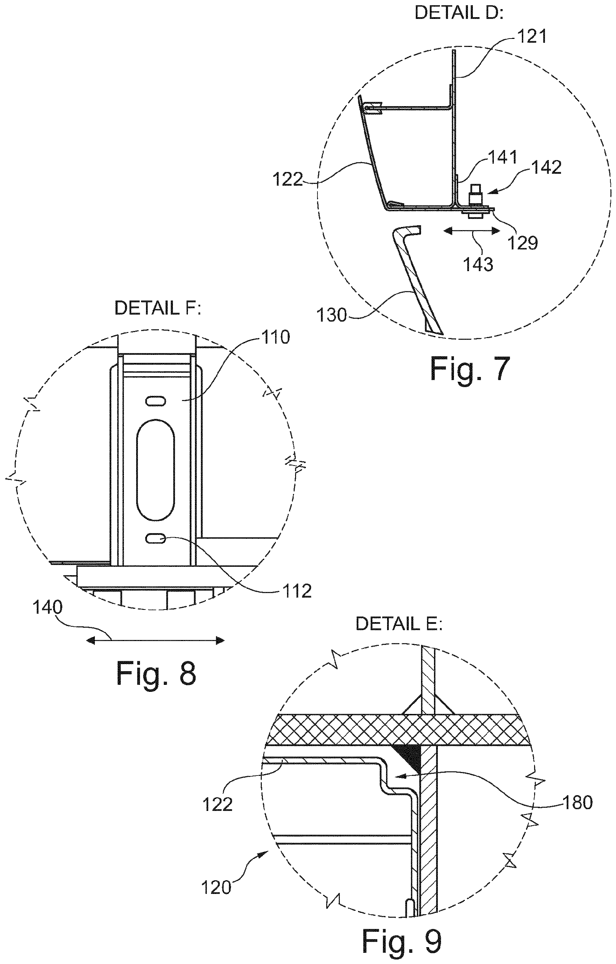

Der Deckel 122 umgreift mit seinem unteren Ende die Unterseite des Kabelkanalkörpes 121 zumindest teilweise. In Bereichen, in denen der Kabelkanalkörper 121 nicht auf den L-förmigen Auflageflächen 111 aufliegt, ist die Deckel verlängert. Figur 4 zeigt einen Schnitt entlang der Linie B-B in Figur 1, der außerhalb der Konsolen 110 verläuft. Figur 7 zeigt eine vergrößerte Ansicht des Details D aus Figur 4. Der Deckel 121 ragt in diesen Bereichen über die innere Längsseite 121b des Kabelkanals 120 hinaus. Die so gebildete Verlängerung 129 ist mit Löchern versehen, um vertikale lösbare Schraubvebindungen 142 mit am Kabelkanalkörper 121 angebrachten L-förmigen Befestigungsblechen 141 zu ermöglichen. Durch diese Schraubverbindungen 142 wird der Deckel 122 in vertikaler Richtung fest von unten gegen die Unterseite des Kabelkanalkörpers 121 gedrückt und umschließt diesen. Die Schraubverbindungen 142 können in Langlöcher eingreifen, die in der Verlängerung 129 des Deckels 122 und den befestigungsblechen 141 ausgebildet sind und sich in Fahrzeugquerrichtung (y-Richtung) 143 erstrecken. Damit ist ein Toleranzausgleich in Fahrzeugquerrichtung 143 möglich.

Der "Boden" des Kabelkanals 120 wird daher teilweise oder vollständig von der unteren Wand des Kabelkanalskörpers 121 und den Deckel 121 gebildet ist daher mechanisch stabiler ausgeführt. Außerdem wird der Deckel 122 fest von der Seite her an den Kabelkanalkörper 121 gezogen und schließt daher bündig mit dem Verlauf der Außenkontur des Schienenfahrzeugwagens ab.

Im Kabelkanalkörper 121 sind weiterhin horizontal verlaufende innere Trennwände 126 angeordnet, welche den Kabelkanal 120 in einzelne voneinander getrennte Innenräume 128 unterteilen. Die dadurch gebildeten seitlich zugänglichen "Fächer" erhöhen die Kapazität des Kabelkanals 120 für eine geordnete Aufnahme von Kabeln, welche auf den inneren Trennwänden 126 zum Liegen kommen. Zum Deckel 122 hin sind die Trennwände mit einer Gummi- oder Plastikkappe 127 versehen, die in Konkakt mit der Innenseite des Deckels 122 stehen.

Zur Befestigung des Kabelkanalkörpers 121 an den Konsolen 110 können beispielsweise lösbare Schraubverbindungen verwendet werden, welche in dazu in den Konsolen 110 vorgesehenen in Fahrzeuglängsrichtung 140 verlaufende Langlöcher 112 eingreifen. Dies ist am besten in Figur 8 erkennbar, die einen vergrößerten Ausschnitt des Details F aus Figur 1 zeigt. Die Langlöcher 112 ermöglichen das Ausrichten des Kabelkanalkörpers 121, und damit des Kabelkanals 120, in x-Richtung.

Da das Gewicht des Kabelkanals 120 im wesentlichen auf den Auflageflächen 111 ruht, werden die Schraubverbindung nur gering belastet, da sie kein Gewicht aufnehmen müssen. Das Blech des Kabelkanalkörpers 121 wird daher nur gering beansprucht.

Die hier konkret gezeigten Konsolen 110 weisen an ihrem unteren Ende C-Schienen 115 auf, um daran eine Drehgestellverkleidung 130 mit weiteren Komponenten, z.B. Scharniere 151, Halter und Gasdämpfer 152, zu befestigen. Diese Ausführung ist insbesondere für Endwagen von Vorteil. Die Anordnung und Ausbildung des oben beschriebenen Kabelkanals 120 und dessen Befestigung an Konsolen 110 ist natürlich auch bei Schienenfahrzeugwagen möglich, die keine Drehgestellverkleidung aufweisen. In diesem Fall kann auch auf die C-Schienen am unteren Ende der Konsolen 110 verzichtet werden.

Wie insbesondere in Figur 3 erkennbar, ist an der C-Schiene 115 ein Scharnier 151 befestigt, welches mit der Drehgestellverkleidung 130 verbunden ist und ein Hochklappen der Drehgestellverkleidung 130 ermöglicht. Die C-Schiene 115 gestatten weiterhin eine Ausrichtung der Scharniere in Fahrzeuglängsrichtung 140 (x-Richtung).

Um die Inspektions kritischer Schweißnähte zu ermöglichen, ist eine Längsvertiefung 180 entlang des Übergangs zwischen der Oberseite 121a des Kabelkanalkörpers 121 und dessen innerer Längsseite 121b ausgebildet, wie in Figur 5 gezeigt. Diese Längsvertiefung 180 erstreckt sich bevorzugt über die gesamte Länge des Kabelkanals 120 und ist gegenüber der zu inspizierenden Schweißnaht, hier beispielsweise der Schweißnaht 161 zwischen der Schlingerdämpferkonsole 160 und dem Untergestell, angeordnet. Die Schlingerdämpferkonsole 160 kann beispielsweise mit dem Langträger 100 und einem Querträger 190 des Untergestells verschweißt sein. Da die Schlingerdämpferkonsole 160 mechanisch stark belastet wird, ist deren regelmäßige Inspektion erforderlich. Die Längsvertiefung 180 erlaubt eine derartige Inspektion, beispielsweise in dem ein Endoskop entlang der Längsvertiefung 180 eingeschoben wird.

Obwohl der Kabelkanal 120 die Schweißnaht 160 verdeckt, ist damit eine Möglichkeit geschaffen worden, eine Inspektion durchzuführen, ohne dass der Kabelkanal 120 entfernt werden muss.

Der Kabelkanal ist daher in seiner Bauform so beschaffen, dass es möglich ist, trotz maximaler Querschnittsfläche für die elektrische Leitungsverlegung die kritischen Bereiche der Schweißnähte 161 zwischen Schlingerdämpferkonsole 160 und dem Untergestell des Wagenkasten einzusehen.

### Bezugszeichenliste

- 100: Langträger
- 110: Konsole
- 111: Auflagefläche
- 112: Langlöcher
- 113: Verstrebung
- 114: Grundplatte
- 115: C-Schiene
- 120,220: Kabelkanal
- 121: Kabelkanalkörper
- 122: Deckel
- 123: Aufnehmung
- 124: Anschlagblech
- 125: Dämpfungselement
- 126: innere Trennwand
- 127: Kappe
- 128: Innenraum
- 129: Verlängerung
- 130,230: Drehgestellverkleidung
- 140: Fahrzeuglängsrichtung
- 141: Befestigungsblech
- 142: Schraubverbindung
- 143: Fahrzeugquerrichtung
- 151: Scharnier
- 152: Gasdämpfer
- 160: Schlingerdämpferkonsole
- 161: Schweißnaht
- 170: Anhebekonsole
- 180: Längsvertiefung
- 190: Querträger
- 200: Schienenfahrzeugwagen (Endwagen)
- 221,222: Drehgestell

## Patentansprüche

1. Schienenfahrzeugwagen mit
einem Untergestell, das mindestens einen sich in Fahrzeuglängsrichtung (140) erstreckenden Langträger (100) umfasst;
mindestens zwei Konsolen (110), die am Langträger (100) befestigt sind; und
mindestens einem Kabelkanal (120),
**dadurch gekennzeichnet, dass** der mindestens eine Kabelkanal (120) längs des Langträgers (100) verläuft, wobei der Kabelkanal (120) einen an den Konsolen (110) befestigten Kabelkanalkörper (121) und einen Deckel (122) aufweist, wobei der Deckel (122) des Kabelkanals (120) zur Außenseite des Schienenfahrzeugs weist und den Kabelkanal (120) seitlich verschließt.

2. Schienenfahrzeugwagen nach Anspruch 1, wobei die Konsolen (110) in Fahrzeuglängsrichtung (140) verlaufende Langlöcher (112) aufweisen, und der Kabelkanalkörper (121) mittels Befestigungsmittel, welche durch die Langlöcher (112) hindurchgreifen, an den Konsolen (110) befestigt ist, um ein Ausrichten des Kabelkanals in Fahrzeuglängsrichtung (140) zu ermöglichen.

3. Schienenfahrzeugwagen nach Anspruch 1 oder 2, wobei der Kabelkanal (120) im Querschnitt gesehen eine zur Schienenfahrzeugmitte weisende innere Längsseite aufweist, mit der der Kabelkanal (120) an den Konsolen (110) anliegt, und der Deckel (122) eine zur Schienenfahrzeugaußenseite weisende äußere Längsseite des Kabelkanals (120) abschließt, wobei die beiden Längsseiten des Kabelkanals (120) länger sind als eine in Fahrzeugquerrichtung verlaufende Unterseite des Kabelkanals (120).

4. Schienenfahrzeugwagen nach einem der Ansprüche 1 bis 3, wobei mindestens eine der Konsolen (110) eine Auflagefläche (111) umfasst, auf der der Kabelkanalkörper (121) aufliegt.

5. Schienenfahrzeugwagen nach Anspruch 4, wobei der Kabelkanalkörper (121) formschlüssig mit Bereichen seiner inneren Längsseite und seiner Unterseite auf der Auflagefläche (111) aufliegt.

6. Schienenfahrzeugwagen nach einem der Ansprüche 1 bis 5, weiterhin umfassend mindestens ein Drehgestell und eine Drehgestellverkleidung (130), die an den Konsolen (110) befestigt ist, wobei der Kabelkanal (120) zwischen dem Langträger (100) des Schienenfahrzeugwagens und der Drehgestellverkleidung (130) angeordnet ist.

7. Schienenfahrzeugwagen nach Anspruch 6, wobei die Drehgestellverkleidung (130) mittels einer C-Schiene (115) an den Konsolen (110) befestigt ist.

8. Schienenfahrzeug nach Anspruch 6 oder 7, wobei die Drehgestellverkleidung (130) klappbar an den Konsolen (110) befestigt ist.

9. Schienenfahrzeugwagen nach einem der Ansprüche 1 bis 8, wobei der Deckel (122) des Kabelkanals (120) in montiertem Zustand den Kabelkanalkörper (121) an dessen Unterseite zumindest teilweise umgreift.

10. Schienenfahrzeugwagen nach einem der Ansprüche 1 bis 9, wobei der Deckel (122) des Kabelkanals (120) mittels Schraubverbindungen (123), die einen Toleranzausgleich in Fahrzeugquerrichtung (143) ermöglichen, am Kabelkanalkörper (121) befestigt ist.

11. Schienenfahrzeugwagen nach einem der Ansprüche 1 bis 10, weiterhin umfassend zumindest eine Schlingerdämpferkonsole (160) und/oder eine Anhebekonsole (170), die am Langträger (100) und/oder einem Querträger (190) des Untergestells befestigt ist oder sind und, von der Außenseite des Schienenfahrzeugwagens gesehen, hinter dem Kabelkanal (120) verlaufen.

12. Schienenfahrzeugwagen nach Anspruch 11, wobei
die Schlingerdämpferkonsole (160) und/oder Anhebekonsole (170) am Langträger (100) und/oder dem Querträger (190) angeschweißt ist oder sind, und
der Kabelkanalkanalkörper (121) an seiner zur Schlingerdämpferkonsole (160) und/oder Anhebekonsole (170) weisenden Seite eine in Längsrichtung des Kabelkanals (120) verlaufende Längsvertiefung (180) entlang der Schweißnaht aufweist.

13. Schienenfahrzeugwagen nach einem der Ansprüche 1 bis 12, wobei der Kabelkanal (120) aus dünnem Blech geformt ist.

14. Kabelkanal (120) für einen Schienenfahrzeugwagen mit einem Untergestell, das mindestens einen sich in Fahrzeuglängsrichtung (140) erstreckenden Langträger (100) umfasst, und mit mindestens zwei Konsolen (110), die am Langträger (100) befestigt sind;
wobei der Kabelkanal (120) einen Kabelkanalkörper (121) mit einem Deckel (122) umfasst, der den Kabelkanal (120) verschließt, **dadurch gekennzeichnet, dass** der Deckel (122) einen Abschnitt einer Außenverkleidung für einen Schienenfahrzeugwagen bildet und der Kabelkanalkörper an den Konsolen des Schienenfahrzeugwagens befestigt werden kann.

## Claims

1. A rail vehicle carriage comprising
an undercarriage comprising at least one longitudinal member (100) extending in the longitudinal direction (140) of the vehicle;
at least two brackets (110) attached to the longitudinal member (100); and
at least one cable duct (120),
**characterised in that** the at least one cable duct (120) runs along the longitudinal member (100), the cable duct (120) having a cable duct body (121) attached to the brackets (110) and a cover (122), the cover (122) of the cable duct (120) facing the outside of the rail vehicle and closing the cable duct (120) laterally.

2. The rail vehicle carriage according to claim 1, wherein the brackets (110) have elongate holes (112) extending in the longitudinal direction (140) of the vehicle, and the cable duct body (121) is secured to the brackets (110) by securing means extending through the elongate holes (112) to enable the cable duct to be aligned in the longitudinal direction (140) of the vehicle.

3. The rail vehicle carriage according to claim 1 or 2, wherein the cable duct (120), viewed in cross-section, has an inner longitudinal side facing the centre of the rail vehicle, with which the cable duct (120) bears against the brackets (110), and the cover (122) closes off an outer longitudinal side of the cable duct (120) facing the outside of the rail vehicle, wherein the two longitudinal sides of the cable duct (120) are longer than an underside of the cable duct (120) extending in the transverse direction of the vehicle.

4. The rail vehicle carriage according to any one of claims 1 to 3, wherein at least one of the brackets (110) comprises a support surface (111) on which the cable duct body (121) rests.

5. The rail vehicle carriage according to claim 4, wherein the cable duct body (121) rests positively with regions of its inner longitudinal side and its underside on the support surface (111).

6. The rail vehicle carriage according to any one of claims 1 to 5, further comprising at least one bogie and a bogie fairing (130) attached to the brackets (110), wherein the cable duct (120) is arranged between the longitudinal member (100) of the rail vehicle carriage and the bogie fairing (130).

7. The rail vehicle carriage according to claim 6, wherein the bogie fairing (130) is attached to the brackets (110) by means of a C-rail (115).

8. The rail vehicle carriage according to claim 6 or 7, wherein the bogie fairing (130) is hingedly attached to the brackets (110).

9. The rail vehicle carriage according to any one of claims 1 to 8, wherein the cover (122) of the cable duct (120), in the assembled state, at least partially engages around the cable duct body (121) on the underside thereof.

10. The rail vehicle carriage according to any one of claims 1 to 9, wherein the cover (122) of the cable duct (120) is fastened to the cable duct body (121) by means of screw connections (123) which allow tolerance compensation in the transverse direction (143) of the vehicle.

11. The rail vehicle carriage according to any one of claims 1 to 10, further comprising at least a yaw damper bracket (160) and/or a lifting bracket (170) which is or are attached to the longitudinal member (100) and/or a transverse member (190) of the underframe and which, viewed from the outside of the rail vehicle carriage, extend behind the cable duct (120).

12. The rail vehicle carriage according to claim 11, wherein
the yaw damper bracket (160) and/or lifting bracket (170) is or are welded to the longitudinal member (100) and/or the transverse member (190), and
the cable duct body (121) has, on its side facing the yaw damper bracket (160) and/or lifting bracket (170), a longitudinal recess (180) running in the longitudinal direction of the cable duct (120) along the weld seam.

13. The rail vehicle carriage according to any one of claims 1 to 12, wherein the cable duct (120) is formed from thin sheet metal.

14. Cable duct (120) for a rail vehicle carriage having an underframe comprising at least one longitudinal member (100) extending in the longitudinal direction (140) of the vehicle, and having at least two brackets (110) fastened to the longitudinal member (100);
wherein the cable duct (120) comprises a cable duct body (121) with a cover (122) closing the cable duct (120), **characterised in that** the cover (122) forms a portion of an outer panelling for a rail vehicle carriage and the cable duct body is fixable to the brackets of the rail vehicle carriage.

## Revendications

1. Voiture de véhicule ferroviaire comportant
un châssis, lequel comprend au moins un longeron (100) s'étendant dans une direction longitudinale de véhicule (140) ;
au moins deux consoles (110), lesquelles sont fixées au longeron (100) ; et
au moins un chemin de câbles (120),
**caractérisée en ce que** l'au moins un chemin de câbles (120) s'étend le long du longeron (100), dans laquelle le chemin de câbles (120) comporte un corps de chemin de câbles (121) fixé aux consoles (110) et un couvercle (122), dans laquelle le couvercle (122) du chemin de câbles (120) est orienté vers le côté extérieur du véhicule ferroviaire et ferme latéralement le chemin de câbles (120).

2. Voiture de véhicule ferroviaire selon la revendication 1, dans laquelle les consoles (110) comportent des trous oblongs (112) s'étendant dans la direction longitudinale de véhicule (140), et le corps de chemin de câbles (121) est fixé aux consoles (110) au moyen des moyens de fixation, lesquels traversent les trous oblongs (112), afin de permettre un alignement du chemin de câbles dans la direction longitudinale de véhicule (140).

3. Voiture de véhicule ferroviaire selon la revendication 1 ou 2, dans laquelle le chemin de câbles (120), vu en section transversale, comporte un côté longitudinal intérieur orienté vers le centre de véhicule ferroviaire et avec lequel le chemin de câbles (120) repose sur les consoles (110), et le couvercle (122) ferme un côté longitudinal extérieur du chemin de câbles (120) orienté vers le côté extérieur de véhicule ferroviaire, dans laquelle les deux côtés longitudinaux du chemin de câbles (120) sont plus longs qu'un côté inférieur du chemin de câbles (120) s'étendant dans la direction transversale de véhicule.

4. Voiture de véhicule ferroviaire selon l'une quelconque des revendications 1 à 3, dans laquelle au moins une des consoles (110) comprend une surface d'appui (111) sur laquelle repose le corps de chemin de câbles (121).

5. Voiture de véhicule ferroviaire selon la revendication 4, dans laquelle le corps de chemin de câbles (121) repose par complémentarité de forme sur la surface d'appui (111) avec des zones de son côté longitudinal intérieur et de son côté inférieur.

6. Voiture de véhicule ferroviaire selon l'une quelconque des revendications 1 à 5, comprenant en outre au moins un bogie et un capot de bogie (130), lequel est fixé aux consoles (110), dans laquelle le chemin de câbles (120) est disposé entre le longeron (100) de la voiture de véhicule ferroviaire et le capot de bogie (130).

7. Voiture de véhicule ferroviaire selon la revendication 6, dans laquelle le capot de bogie (130) est fixé aux consoles (110) au moyen d'un rail en C (115).

8. Véhicule ferroviaire selon la revendication 6 ou 7, dans lequel le capot de bogie (130) est fixé aux consoles (110) de manière rabattable.

9. Voiture de véhicule ferroviaire selon l'une quelconque des revendications 1 à 8, dans laquelle le couvercle (122) du chemin de câbles (120), à l'état monté, entoure au moins partiellement le corps de chemin de câbles (121) au niveau de son côté inférieur.

10. Voiture de véhicule ferroviaire selon l'une quelconque des revendications 1 à 9, dans laquelle le couvercle (122) du chemin de câbles (120) est fixé au corps de chemin de câbles (121) au moyen des liaisons vissées (123), lesquelles permettent une compensation des tolérances dans une direction transversale de véhicule (143).

11. Voiture de véhicule ferroviaire selon l'une quelconque des revendications 1 à 10, comprenant en outre au moins une console d'amortisseur de lacet (160) et/ou une console de levage (170), lesquelles sont fixées au longeron (100) et/ou à une traverse (190) du châssis et lesquelles, vues depuis le côté extérieur de la voiture de véhicule ferroviaire, s'étendent derrière le chemin de câbles (120).

12. Voiture de véhicule ferroviaire selon la revendication 11, dans laquelle
la console d'amortisseur de lacet (160) et/ou la console de levage (170) sont soudées au longeron (100) et/ou à la traverse (190), et
le corps de chemin de câbles (121) comporte une dépression longitudinale (180) s'étendant dans la direction longitudinale du chemin de câbles (120) le long du cordon de soudure sur son côté tourné vers la console d'amortisseur de lacet (160) et/ou la console de levage (170).

13. Voiture de véhicule ferroviaire selon l'une quelconque des revendications 1 à 12, dans laquelle le chemin de câbles (120) est formé à partir d'une tôle mince.

14. Chemin de câbles (120) pour une voiture de véhicule ferroviaire comportant un châssis, lequel comprend au moins un longeron (100) s'étendant dans la direction longitudinale de véhicule (140), et comportant au moins deux consoles (110), lesquelles sont fixées au longeron (100) ;
dans lequel le chemin de câbles (120) comprend un corps de chemin de câbles (121) comportant un couvercle (122) et fermant le chemin de câbles (120), **caractérisé en ce que** le couvercle (122) forme une section d'un capot extérieur pour une voiture de véhicule ferroviaire et le corps de chemin de câbles peut être fixé sur les consoles de la voiture de véhicule ferroviaire.
